(19) Europäisches Patentamt
European Patent Office
Office européen des brevets

(11) Veröffentlichungsnummer: **0 594 147 A1**

# (12) EUROPÄISCHE PATENTANMELDUNG

(21) Anmeldenummer: **93116953.6**

(22) Anmeldetag: **20.10.93**

(51) Int. Cl.$^5$: **C08F 232/08**, C08F 210/02, G02F 1/1333

(30) Priorität: **24.10.92 DE 4235992**

(43) Veröffentlichungstag der Anmeldung: **27.04.94 Patentblatt 94/17**

(84) Benannte Vertragsstaaten: **DE FR GB**

(71) Anmelder: **HOECHST AKTIENGESELLSCHAFT**
**Brüningstrasse 50**
**D-65929 Frankfurt am Main(DE)**

(72) Erfinder: **Brekner, Michael-Joachim, Dr.**
**Geisenheimer Strasse 90**
**D-60529 Frankfurt am Main(DE)**
Erfinder: **Jungbauer, Dietmar, Dr.**
**Thomas-Mann-Strasse 8**
**D-64331 Weiterstadt(DE)**

## (54) Cycloolefin-Copolymerisate (COC) als Substratmaterial für Flüssigkristalldisplays.

(57) Ein Substrat für Flüssigkristall-Displays, ist dadurch gekennzeichnet, daß es aus Polymeren von polycyclischen Olefinen durch Polymerisation ohne Ringöffnung von mindestens einem Monomeren der Formeln (I), (II), (III), (IV), (V) oder (VI) gebildet ist,

EP 0 594 147 A1

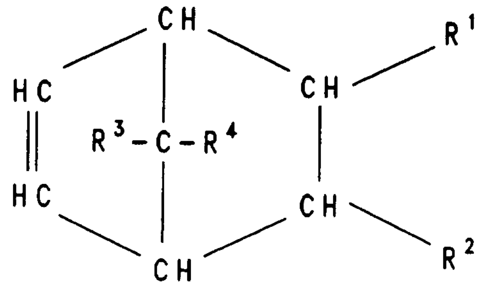

(I),

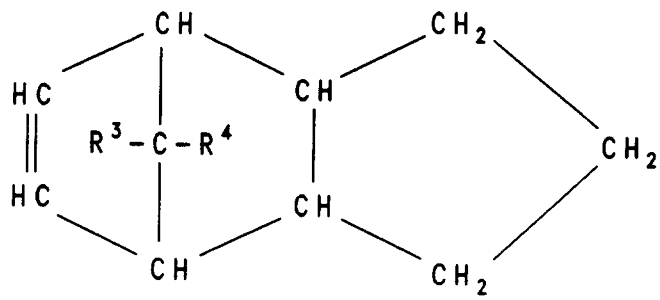

(II),

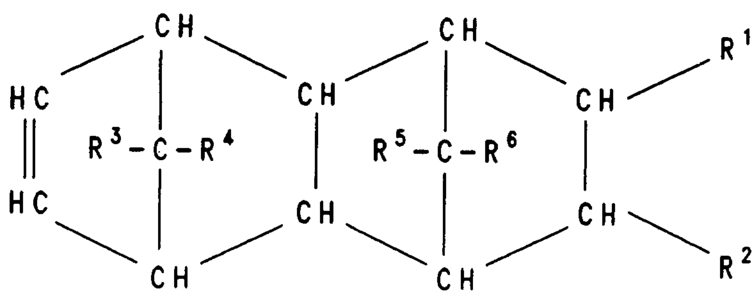

(III),

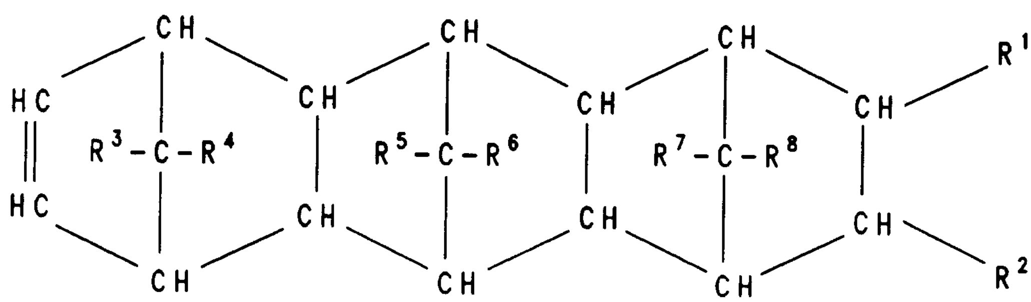

(IV),

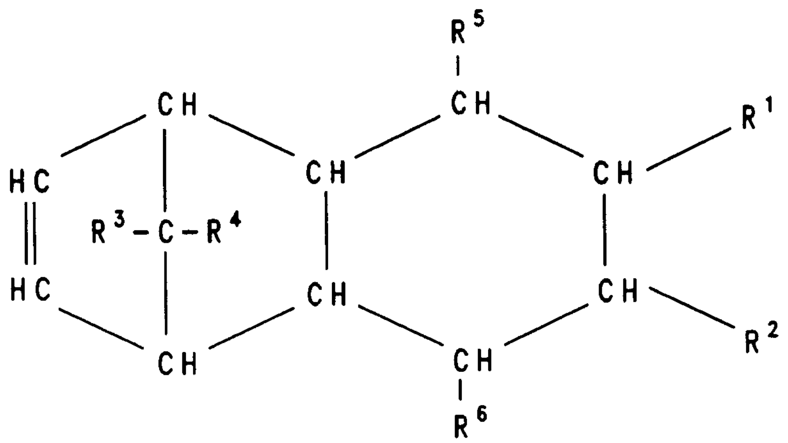

(V),

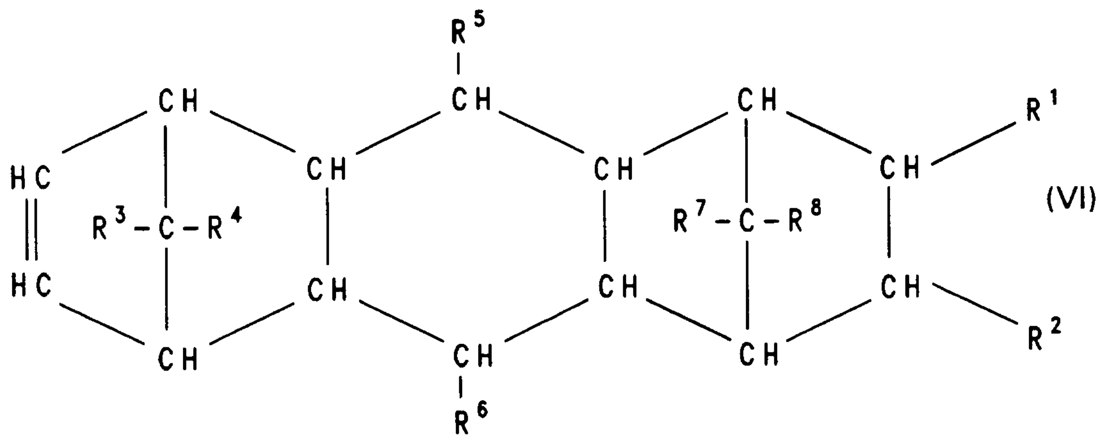

(VI),

worin $R^1$, $R^2$, $R^3$, $R^4$, $R^5$, $R^6$, $R^7$ und $R^8$ gleich der verschieden sind und ein Wasserstoffatom oder einen $C_1$-$C_8$-Alkylrest bedeuten, wobei gleiche Reste in den verschiedenen Formeln eine unterschiedliche Bedeutung haben können.

Durch die erfindungsgemäße Verwendung von Cycloolefincopolymerisaten als Substratmaterial sind Prozeßtemperaturen bei der Displayherstellung von mehr als 180 °C möglich. Cycloolefincopolymerisate sind leichter und weniger spröde als Glas. Anderen Kunststoffen gegenüber besitzen sie Vorteile bei Spannungskoeffizienten, thermischer Ausdehnung, Härte, Dichte, Transparenz, Wasseraufnahme und bezüglich der Doppelbrechung. Weiterhin zeigen sie eine hohe Resistenz gegen polare Lösungsmittel.

Schalt- und Anzeigevorrichtungen, die Flüssigkristall-Mischungen enthalten (LCDs), sind beispielsweise aus "B. Bahadur, Liquid Crystals, Applications and Uses, World Scientific, Singapur 1990" und EP-B 0 032 362 (= US-A 4 367 924) bekannt. Flüssigkristalldisplays sind Vorrichtungen, die z. B. aufgrund elektrischer Beschaltung ihre optischen Transmissionseigenschaften derart ändern, daß durchfallendes (und gegebenenfalls wieder reflektiertes) Licht intensitätsmoduliert wird. Beispiele sind die bekannten Uhren- und Taschenrechneranzeigen oder Flüssigkristalldisplays im OA- (office automation) oder TV (television) Bereich (siehe auch Liquid Crystal Device Handbook, Nikkan Kogyo Shimbun, Tokyo, 1989; ISBN 4-526-02590-9C 3054 und darin zitierte Arbeiten).

Diese LC-Displays sind i. a. so aufgebaut, daß eine Flüssigkristallschicht beiderseitig von Schichten eingeschlossen ist, die üblicherweise, in dieser Reihenfolge ausgehend von der LC-Schicht, mindestens eine Orientierungsschicht, Elektroden und eine Begrenzungsscheibe ("Substrat") sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten, z. B. Diffusionssperr- oder Isolationsschichten, enthalten.

Stand der Technik ist es (siehe z. B. die oben zitierte Literatur) Substrate aus Glas zu verwenden. Nachteile von Glas sind jedoch unter anderem der hohe Preis, das hohe Gewicht und die Sprödigkeit. Zu dem besteht bei Einsatz von Glas prinzipiell immer die Gefahr, daß insbesondere Natriumionen in die Flüssigkristallschicht diffundieren und dadurch die optoelektrischen Eigenschaften des Displays verschlechtert werden.

Als Ersatzmaterialien sind transparente Kunststoffe, wie Poly(acrylmethacrylat) (PMMA) und Poly-(carbonat) (PC), denkbar. Beide Materialien zeigen jedoch ungenügende Wärmebeständigkeit (PMMA: $T_g$ = 110 °C; PC: $T_g$ = 130 °C) und eine zu hohe Wasseraufnahme. Bei PMMA bereitet zudem die Doppelbrechung Probleme.

Aufgabe der vorliegenden Erfindung war es, ein Substratmaterial für LCDs bereitzustellen, das die oben beschriebenen Nachteile vermeidet.

Die Lösung der Aufgabe erfolgt durch die Verwendung von Cycloolefin-Copolymerisaten als Substratmaterial für LCDs.

Gegenstand der Erfindung ist ein Substrat für Flüssigkristalldisplays, bestehend aus einem oder einer Mischung von Polymeren von polycyclischen Olefinen, gebildet durch Polymerisation ohne Ringöffnung von mindestens einem Monomeren der Formeln (I), (II), (III), (IV), (V) oder (VI).

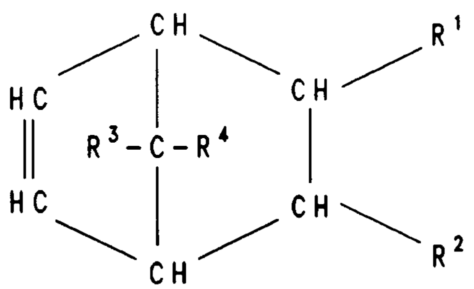

(I),

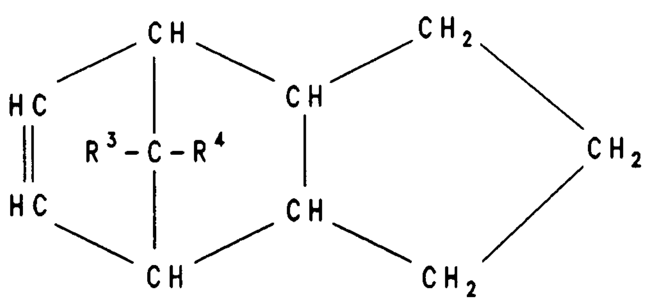

(II),

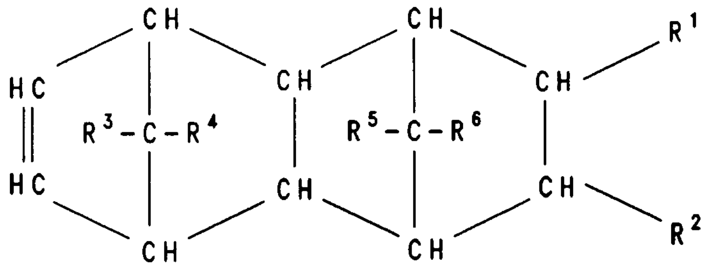

(III),

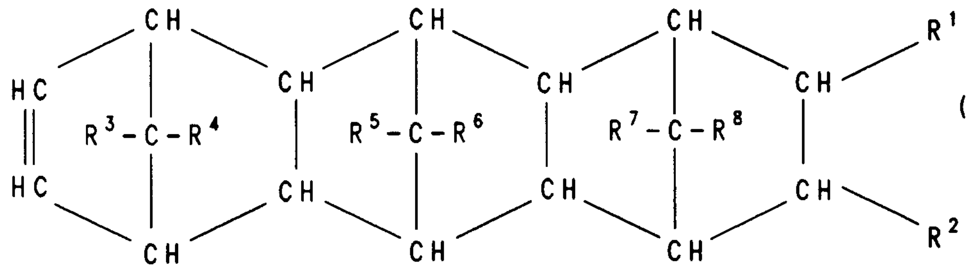

(IV),

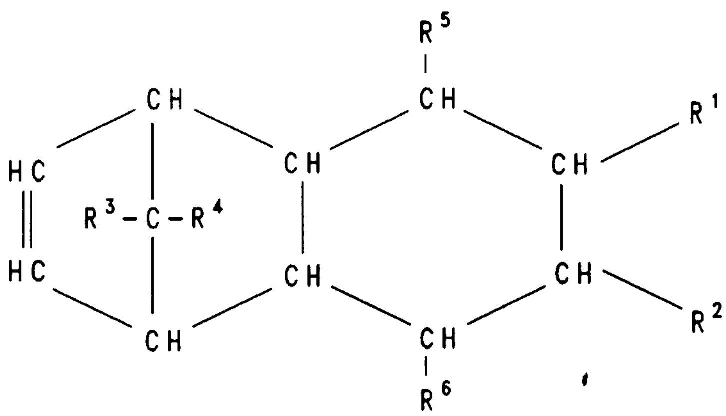

(V),

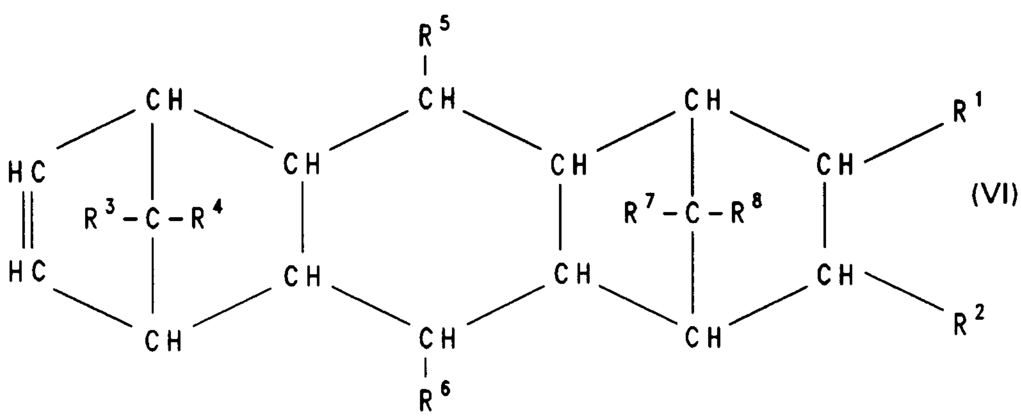

(VI),

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, in das zusätzlich ein Cycloolefin der Formel (VII) eingebaut sein kann,

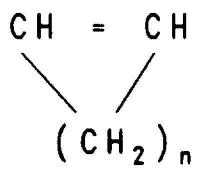

(VII)

worin n eine Zahl von 2 bis 10 ist;
und das als weiteren Zusatz ein acyclisches 1-Olefin der Formel (VIII)

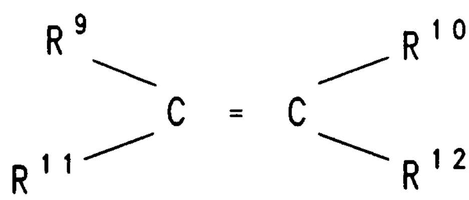

(VIII)

enthalten kann, worin $R^9$, $R^{10}$, $R^{11}$ und $R^{12}$ gleich oder verschieden sind und ein Wasserstoffatom oder einen $C_1$-$C_8$-Alkylrest bedeuten.

Durch die erfindungsgemäße Verwendung von Cycloolefincopolymerisaten sind Prozeßtemperaturen von mehr als 180°C möglich. Cycloolefincopolymerisate sind leichter und weniger spröde als Glas. Anderen Kunststoffen gegenüber besitzen sie Vorteile beim spannungsoptischen Koeffizienten, der thermischen Ausdehnung, Härte, Dichte, Transparenz, Wasseraufnahme und bezüglich der Doppelbrechung. Weiterhin zeigen sie eine hohe Resistenz gegen polare Lösungsmittel.

- die Reißspannung beträgt 40 bis 66 Mpa;
- die Löslichkeit ist in Toluol, Xylol, Cyclohexan, Exxsol (hydrierte Dieselfraktion), Chloroform, Diethyläther gegeben;
- Unlöslichkeit in Wasser, Alkoholen, Ketonen (Aceton), Estern, Amiden (DMF, DMAC, NMP) ist gegeben;
- chemische Resistenz gegen wäßrige und konzentrierte Säure, wie HCl, $H_2SO_3$, und Basen, wie NaOH, KOH, ist gegeben.

Eine weitere wesentliche Eigenschaft der COC-Basistypen ist ihre geringe inhärente Doppelbrechung, d. h. eine geringe Anisotropie der molekularen Polarisierbarkeit, sowie ihre Hydrolysebeständigkeit.

Die für das Substrat bevorzugt verwendeten Cycloolefincopolymerisate, weiterhin abgekürzt COC, sind Cycloolefine, wie Norbornen-Ethylen- oder Tetracyclododecen-Ethylen-Copolymere. Insbesondere handelt es sich um Copolymere aus Norbornen und Ethylen, die eine thermische Formbeständigkeit für einen Bereich der Glastemperatur von 140 bis 200°C aufweisen. Abweichend von den COC-Basistypen können auch andere Norbornenderivate Legierungen verschiedener COC-Typen verwendbar.

In weiterer Ausgestaltung des Substrats ist dieses aus Polymeren von polycyclischen Olefinen durch Polymerisation ohne Ringöffnung von 0,1 bis 100 Gew.-%, bezogen auf die Gesamtmenge der Monomeren, mindestens eines Monomers der Formeln (I), (II), (III), (IV), (V) oder (VI)

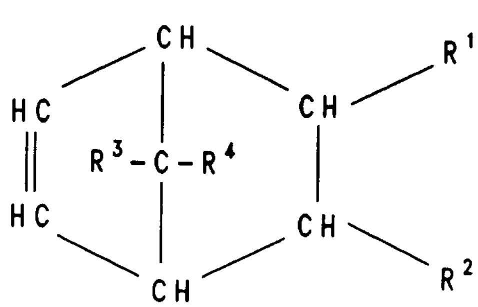

(I),

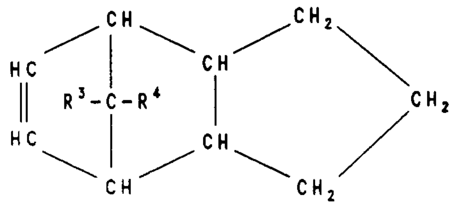

(II),

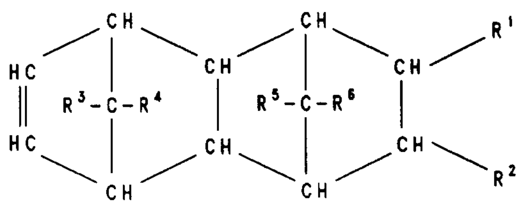

(III),

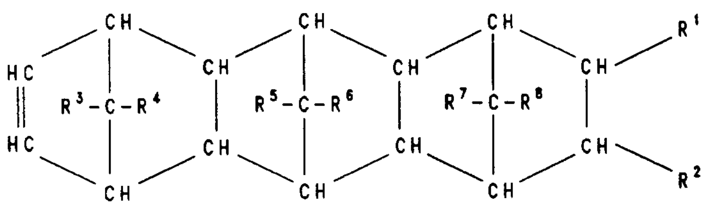

(IV),

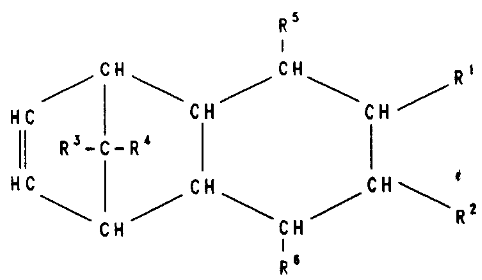

(V),

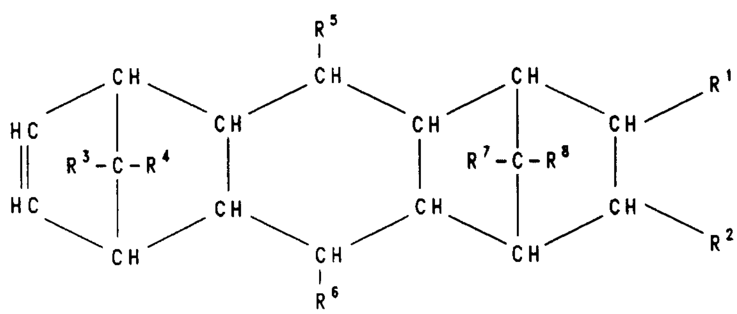

(VI),

worin $R^1$, $R^2$, $R^3$, $R^4$, $R^5$, $R^6$, $R^7$ und $R^8$ gleich der verschieden sind und ein Wasserstoffatom oder einen $C_1$-$C_8$-Alkylrest bedeuten, wobei gleiche Reste in den verschiedenen Formeln eine unterschiedliche Bedeutung haben können, 0 bis 99,0 Gew.-%, bezogen auf die Gesamtmenge der Monomeren, eines Cycloolefins der Formel (VII)

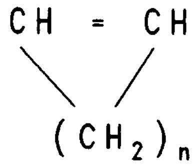

(VII)

worin n eine Zahl von 2 bis 10 ist, und
0 bis 99,9 Gew.-%, bezogen auf die Gesamtmenge der Monomeren, mindestens eines acyclischen 1 -Olefins der Formel (VIII)

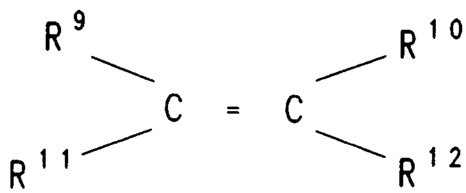

(VIII)

gebildet, worin $R^9$, $R^{10}$, $R^{11}$ und $R^{12}$ gleich oder verschieden sind und ein Wasserstoffatom oder einen $C_1$-$C_8$-Alkylrest bedeuten.

Norbornen-Ethylen-Copolymere werden gegenüber Dimethano-octahydronaphthalin (DMON)-Ethylen-Copolymeren bevorzugt, weil bei Norbornen-Ethylen-Copolymeren ein Niveau hoher Isotropie der Polarisierbarkeit bei höheren Glastemperaturen erreicht wird als im Falle von DMON-Ethylen-Copolymeren.

Beispiele für die Synthese einzelner COC-Typen sowie die Beschreibung des Verfahrens zur Herstellung von COC-Typen mittels Massenpolymerisation mit speziellen Metallocenkatalysatoren sind in der deutschen Patentanmeldung P 40 36 264.7 beschrieben.

Eine Polymerisation unter Einsatz von Katalysatoren auf der Basis von Metallocenen wird nicht zuletzt wegen der gesundheitlichen Unbedenklichkeit dieser Verbindungen bevorzugt. Besonders bedenklich sind Verfahren zur Herstellung von Substratmaterialien unter Verwendung von Katalysatoren auf Vanadiumbasis. Vanadium ist äußerst giftig, und in der Regel bleiben Spuren von Vanadium im Substratmaterial zurück, was bei dessen Wiederaufarbeitung besondere Sicherheitsmaßnahmen erforderlich macht.

Die erfindungsgemäßen LCD-Substrate aus COC können in Flüssigkristalldisplays aller Art, insbesondere auch ferroelektrischen, eingesetzt werden. Geeignete Displays sind außer in den eingangs zitierten Quellen beispielsweise auch in EP-A-0 474 655 und EP-A-0 477 257 beschrieben.

Die Erfindung wird durch das Beispiel näher erläutert.

Beispiel

Bau einer Testzelle

Zum Nachweis der vorteilhaften Eigenschaften der erfindungsgemäßen Substrate wird eine Testzelle hergestellt, die mit einer ferroelektrischen Flüssigkristallmischung gefüllt und anschließend geprüft wird.

Dazu wird ein Norbornen/Ethylen Copolymerisat, wie es in EP-A 0 485 893, Beispiel 11 beschrieben ist, mit Indium-Zinn-Oxid (ITO) beschichtet, geschnitten und photolitographisch so bearbeitet, daß kleine Substrate mit einer ca. 8 x 8 $mm^2$ großen Elektrodenfläche entstehen. Diese Substrate werden dann zunächst in einer wäßrigen Tensidlösung und anschließend zweimal in Milliporewasser (= entmineralisiertes Wasser, das über ein Filteranlage der Fa. Millipore weitgehend von Partikeln befreit wurde,) bei ca. 60 °C im Ultraschallbad gereinigt. Nachdem die Substrate mit Heißluft getrocknet worden sind, werden sie mit einem Naßfilm aus einer 0,5 gew.-%igen Lösung von P1 (s.u.) in Cyclohexanon beschichtet. Die Beschichtung wird mit einem Spincoater durchgeführt, kann aber auch mit anderen, z. B. Druck- oder Tauchverfahren erfolgen. Die Lösung wird auf das Substrat bis zur vollständigen Bedeckung aufgetropft, mit 500 rpm 5 min vorgeschleudert und mit 4000 rpm 30 min hauptgeschleudert. Der Naßfilm wird 30 min bei

160 °C getrocknet. Die zurückbleibende Schichtdicke von P1 beträgt ca. 15 nm. Diese Orientierungsschicht wird dann mit einem samtartigen Stoff auf einer Reibemaschine gerieben (Tischgeschw.: 100 nm/min; Walzendrehzahl: 500 rpm; Stromaufnahme: 0,4/A). Anschließend werden mit dem Spincoater die 1,8 µm Spacer (0,05 gew.-%ige Lösung in Isopropanol; 20 sec., 2000 rpm) aufgebracht. Mit dem Plotter wird der Kleberahmen gedruckt und dann wird die Flüssigkristall-Testzelle bei paralleler Reibrichtung unter Verwendung einer Membranpresse verklebt (Kleberkonditionen: Epoxy 304 (5 Teile) + Härter 310 B (1 Teil) (beide Firma E. H. C., Japan) das Gemisch wird dann mit Ethylacetat (4 : 1) versetzt. Härtetemperaturen: 20 min 60 °C/20 min 90 °C/40 min 150 °C).

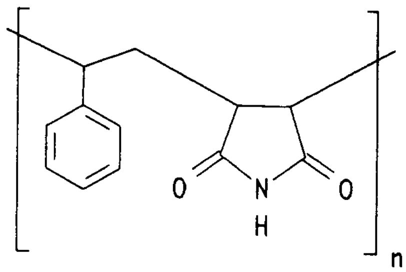

P 1

Die so erhaltene Testzelle wird in Hinsicht auf ihre elektrooptischen Kenngrößen mit einer Flüssigkristallmischung untersucht.

Die eingesetzte FLC-Mischung M1 besitzt folgende Zusammensetzung (in Mol %):

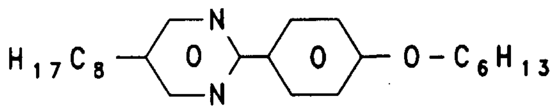

14,58

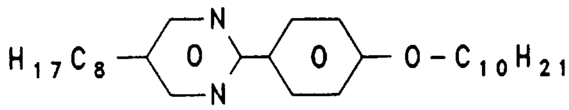

9,72

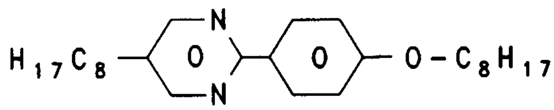

13,08

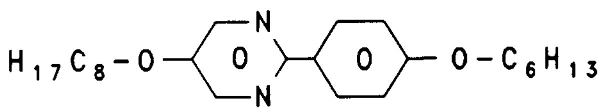

9,11

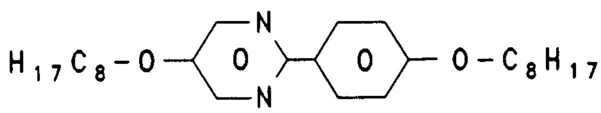

4,21

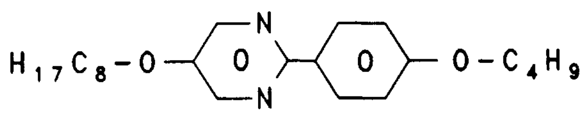

9,62

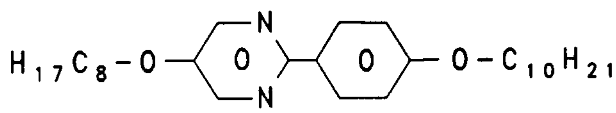

7,65

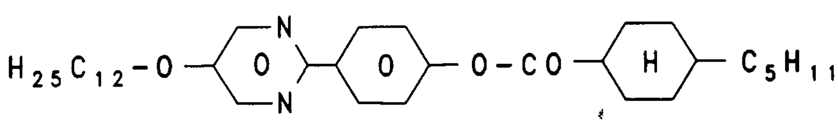

14,42

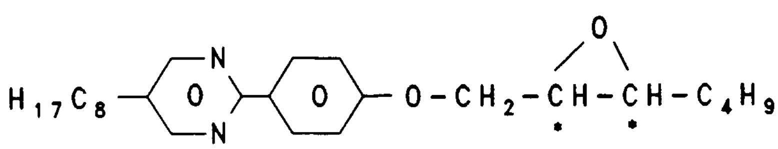

10,50

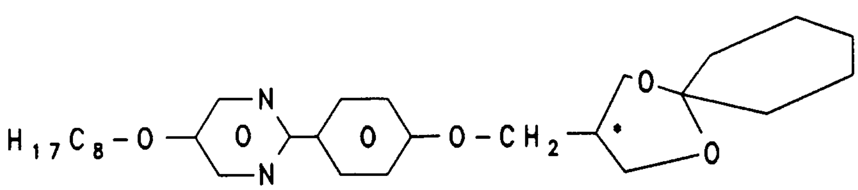

1,99

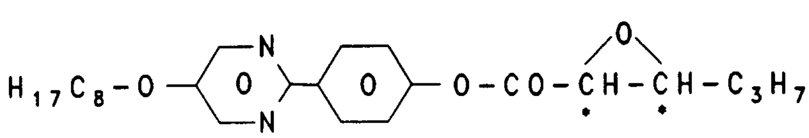

5,12

und die Phasenfolge $S_C^*$ 65 $S_A$*73 N*86 I mit einer spontanen Polarisation von 38 $nC \cdot cm^{-2}$ bei einer Temperatur von 25 °C.

Gemessene Kenngrößen

| | |
|---|---|
| M 1 + COC-Substrat | |
| effektiver Tiltwinkel $\theta$eff (Chevron-Textur) | 8,5° bis 9° |
| Orientierung des Flüssigkristalls | sehr gut |
| B* max (maximaler Bias bei 50 $\mu$s Pulsbreite) | ~ 4 |
| Twist Zustände | keine |

Die gemessene Kenngrößen belegen, daß bei Verwendung der erfindungsgemäßen Substrate aus COC Flüssigkristallzellen mit hervorragenden elektrooptischen Eigenschaften erhalten werden.

## Patentansprüche

1. Substrat für Flüssigkristall-Displays, dadurch gekennzeichnet, daß es aus Polymeren von polycyclischen Olefinen durch Polymerisation ohne Ringöffnung von mindestens einem Monomeren der Formeln (I), (II), (III), (IV), (V) oder (VI) gebildet ist,

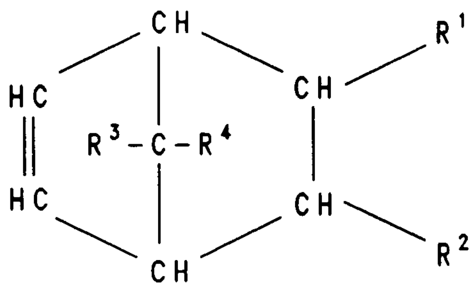

(I),

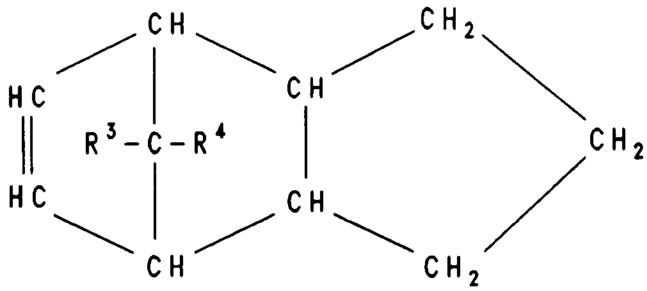

(II),

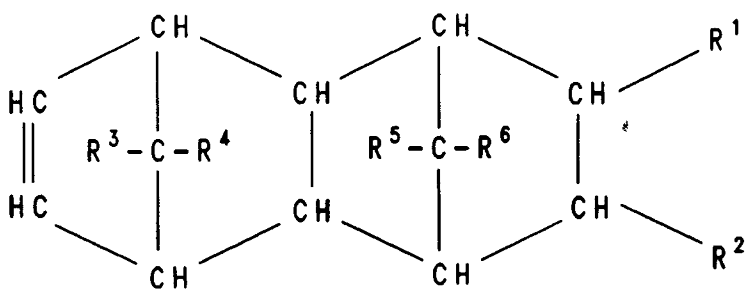

(III),

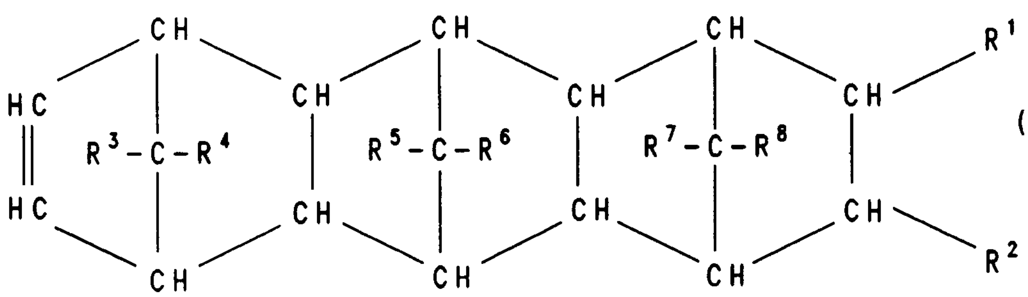

(IV),

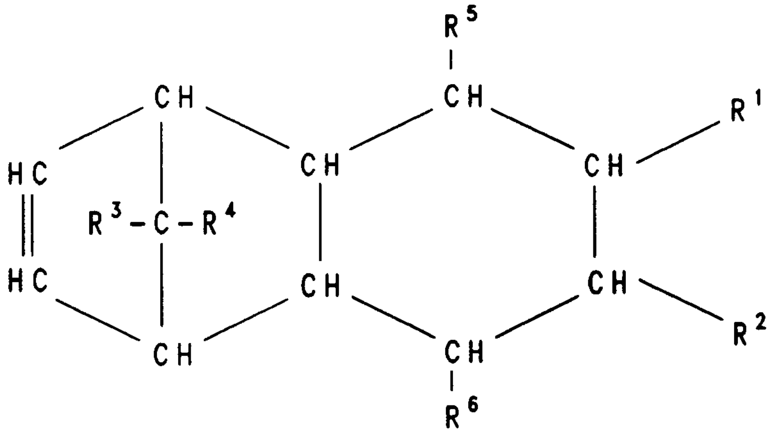

(V),

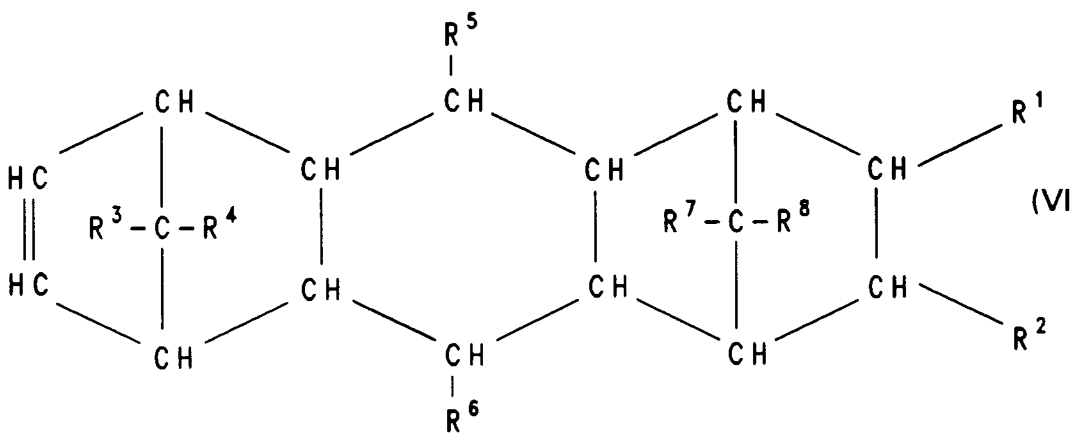

(VI),

worin $R^1$, $R^2$, $R^3$, $R^4$, $R^5$, $R^6$, $R^7$ und $R^8$ gleich der verschieden sind und ein Wasserstoffatom oder einen $C_1$-$C_8$-Alkylrest bedeuten, wobei gleiche Reste in den verschiedenen Formeln eine unterschiedliche Bedeutung haben können.

2. Substrat nach Anspruch 1, dadurch gekennzeichnet, daß in das Material des Substrats zusätzlich ein Cycloolefin der Formel (VII) eingebaut worden ist, worin n eine Zahl von 2 bis 10 ist:

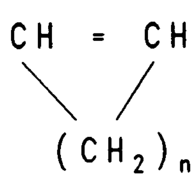

(VII)

3. Substrat nach Anspruch 1 oder 2, dadurch gekennzeichnet, daß das Substrat zusätzlich mindestens eine acyclisches 1-Olefin der Formel (VIII)

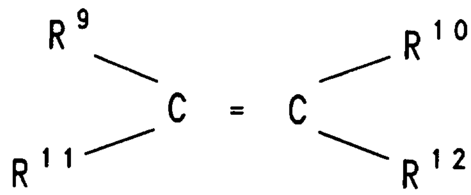

(VIII),

enthält, worin $R^9$, $R^{10}$, $R^{11}$ und $R^{12}$ gleich oder verschieden sind und ein Wasserstoffatom oder einen $C_1$-$C_8$-Alkylrest bedeuten.

4. Substrat nach mehreren der Ansprüche 1 bis 3, dadurch gekennzeichnet, daß das Substrat aus einer Mischung unterschiedlicher Polymere, die in den Ansprüche 1 bis 3 genannt sind, besteht.

5. Substrat, dadurch gekennzeichnet, daß das Substrat aus Polymeren von polycyclischen Olefinen durch Polymerisation ohne Ringöffnung von 0,1 bis 100 Gew.-%, bezogen auf die Gesamtmenge der Monomeren, mindestens eines Monomers der Formeln (I), (II), (III), (IV), (V) oder (VI)

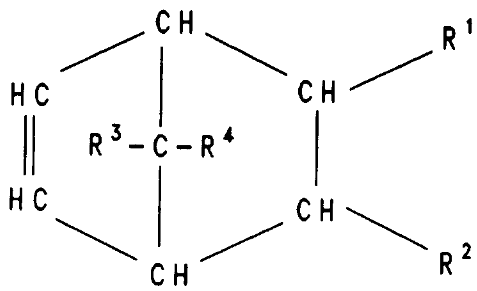

(I),

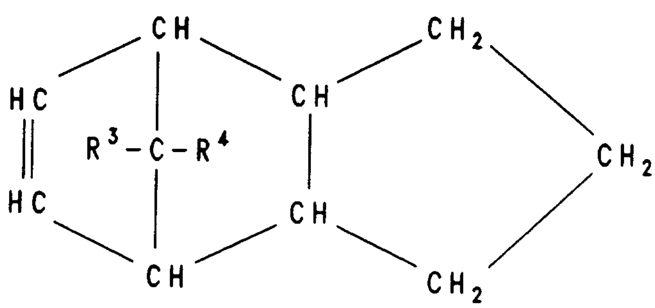

(II),

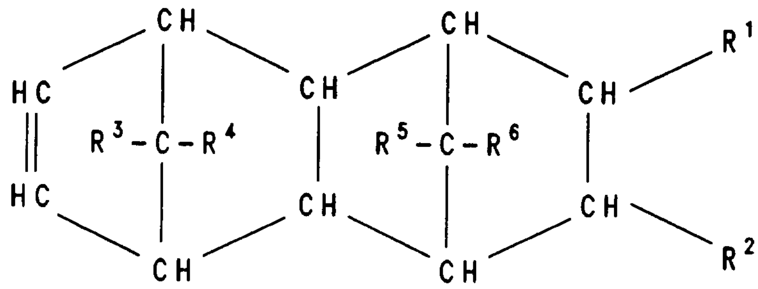

(III),

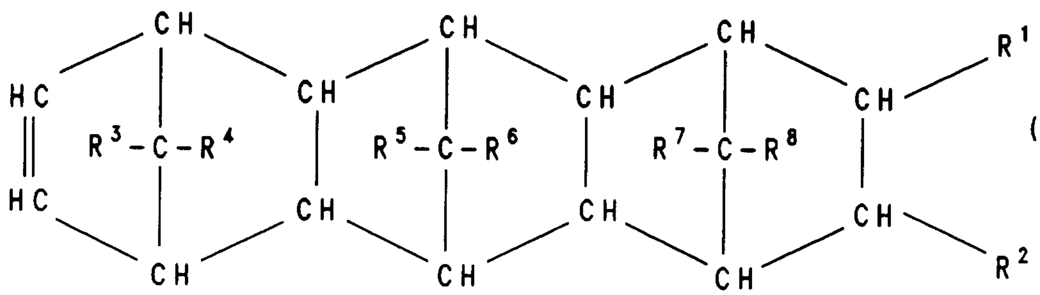

(IV),

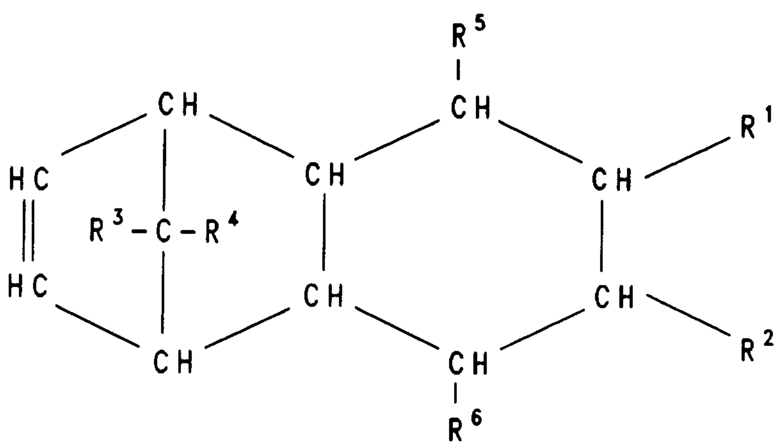

(V),

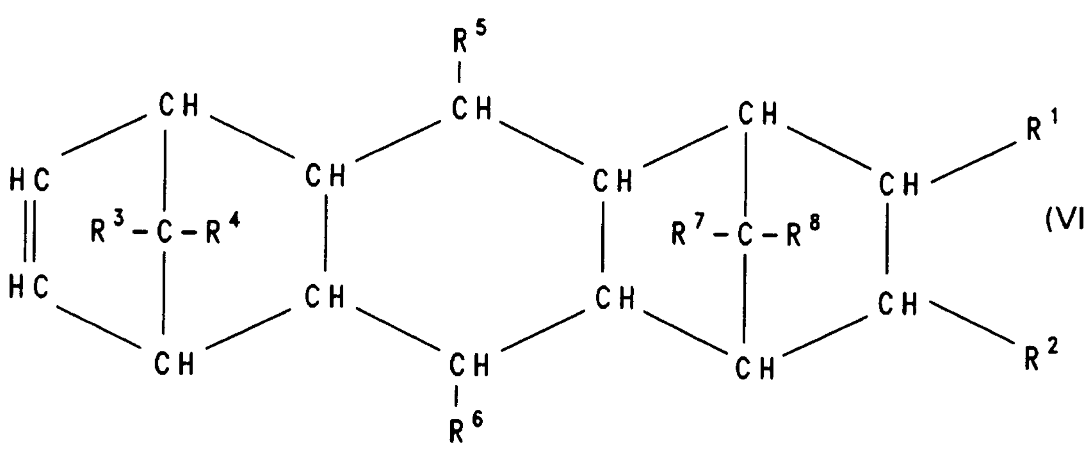

(VI),

worin $R^1$, $R^2$, $R^3$, $R^4$, $R^5$, $R^6$, $R^7$ und $R^8$ gleich der verschieden sind und ein Wasserstoffatom oder einen $C_1$-$C_8$-Alkylrest bedeuten, wobei gleiche Reste in den verschiedenen Formeln eine unterschiedliche Bedeutung haben können, 0 bis 99,0 Gew.-%, bezogen auf die Gesamtmenge der Monomeren, eines Cycloolefins der Formel (VII)

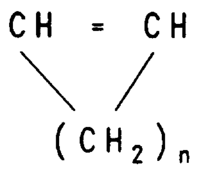

(VII)

worin n eine Zahl von 2 bis 10 ist, und
0 bis 99,9 Gew.-%, bezogen auf die Gesamtmenge der Monomeren, mindestens eines acyclischen 1-Olefins der Formel (VIII)

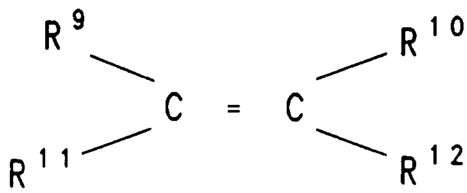

(VIII)

gebildet ist, worin $R^9$, $R^{10}$, $R^{11}$ und $R^{12}$ gleich oder verschieden sind und ein Wasserstoffatom oder einen $C_1$-$C_8$-Alkylrest bedeuten.

**6.** Substrat nach einem oder mehreren der Ansprüche 1 bis 5, dadurch gekennzeichnet, daß es ein Norbornen-Ethylen-Copolymer oder ein Tetracyclodeodecen-Ethylen-Copolymer ist.

**7.** Substrat nach einem oder mehreren der Ansprüche 1 bis 6, dadurch gekennzeichnet, daß es aus Copolymeren aus Norbornen und Ethylen besteht und eine thermische Formbeständigkeit für einen Bereich der Glastemperatur von 140 bis 200 °C aufweist.

**8.** Flüssigkristalldisplay, enthaltend ein Substrat nach einem oder mehreren der Ansprüche 1 bis 7.

**9.** Flüssigkristalldisplay nach Anspruch 8, dadurch gekennzeichnet, daß es ferroelektrisch ist.

Europäisches Patentamt

# EUROPÄISCHER RECHERCHENBERICHT

Nummer der Anmeldung
EP 93 11 6953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 501 370 (HOECHST)<br>* Beispiel 1 * | 1 | C08F232/08<br>C08F210/02<br>G02F1/1333 |
| X | EP-A-0 283 164 (MITSUI PETROCHEMICAL INDUSTRIES)<br>* Beispiel 1 *<br>* Seite 15, Zeile 28 - Zeile 34 * | 1 | |
| D,X | EP-A-0 485 893 (HOECHST)<br>* Seite 12, Zeile 18 - Zeile 22 * | 1 | |
| X | EP-A-0 362 814 (SHOWA DENKO KABUSHIKI KAISHA)<br>* Seite 10, Zeile 20 - Zeile 25 * | 1 | |

RECHERCHIERTE SACHGEBIETE (Int.Cl.5)
C08F
G02F

Der vorliegende Recherchenbericht wurde für alle Patentansprüche erstellt

| Recherchenort | Abschlußdatum der Recherche | Prüfer |
|---|---|---|
| DEN HAAG | 26. Januar 1994 | Andriollo, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)